(19) Europäisches Patentamt
European Patent Office
Office européen des brevets

(11) **EP 3 107 001 A1**

(12) **EUROPEAN PATENT APPLICATION**

(43) Date of publication:
**21.12.2016 Bulletin 2016/51**

(51) Int Cl.:
***G06F 17/22*** *(2006.01)*

(21) Application number: **15305924.1**

(22) Date of filing: **15.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **Longet, Aurélien**
  **35576 Cesson-Sévigné (FR)**
• **Eluard, Marc**
  **35576 Cesson-Sévigné (FR)**
• **Maetz, Yves**
  **35576 Cesson-Sévigné (FR)**

(74) Representative: **Huchet, Anne**
  **TECHNICOLOR**
  **1-5, rue Jeanne d'Arc**
  **92130 Issy-les-Moulineaux (FR)**

(54) **METHOD AND APPARATUS FOR DOCUMENT CONSISTENCY ANALYSIS**

(57)   A method for checking the consistency between documents involved in a writing project includes analyzing received digital documents of the writing project for consistency errors. The document analysis is performed against a graph model of the writing process that links digital documents available in the writing project. The graph model includes a plurality of nodes and links between them. Documents are associated with the nodes and links between the nodes describe the direction and type of consistency to be achieved between the documents. The consistency analyzer performs a consistency analysis and reports consistency errors.

Fig.11

**Description**

FIELD

The present invention relates to consistency checking in digital content generation, specifically reporting consistency errors between different digital documents.

**BACKGROUND**

The generation of a creative document, such as a script for a play or a movie, is often the culmination of multiple earlier-generated and co-generated documents that provide varying levels of description and detail of the storyline or progression of events in the play or script. As such, these many earlier-generated and co-generated documents are referenced often by the script writer during the script drafting process. Corrections and edits to the script and other related documents are an iterative and time-consuming process. Thus, screenwriting tools have emerged to assist the script writer in their tasks.

The objective of screenwriting tools is to help writer to generate the script. A script is a document, generally around 150 pages, that details the actions and dialogs of the different characters in each scene. The script writer has to define the main concepts of the story, such as locations and characters, as well as the interactions between them. Numerous screenwriting tools are available on the market.

However, scriptwriting is only the last step in the writing stage. Before that last stage, the writer may have issued other intermediate documents as mentioned above. Some of these documents are internal documents to clarify and develop the vision of the writer regarding the story, the characters, the environment in which the story takes place, etc. The intermediate documents may represent different versions of the same content but with different lengths and different syntaxes.

All of these documents, both intermediate and final, have one thing in common, they are about the same story. Between all these documents, many relationships may exist. Some of the documents are written simultaneously while others are written consecutively. These relationships and their writing order depend on each creation project.

These documents may be termed "elements". The elements are documents that have some relationship with one another. Examples of elements include the title, the logline, the summary, a synopsis, a treatment, and a script or screenplay. A title includes a few words. A logline is a very short section of text, typically a single sentence or two that describes the overall story. A summary is a few sentences or paragraphs that give a more detailed version of the events and characters in the storyline. A synopsis is an even more detailed account of the storyline. The synopsis can include a dozen or so paragraphs over many pages. A treatment is a yet longer document with dozens of pages describing the actions but no dialog. A script or screen play is the ultimate document, having often around one page per scene. Typically, scripts or screenplays are about 100 to 200 pages in length for a full feature movie. The script includes the dialogs. The above list of documents is an example of related elements in the screenwriting process. The above elements may have contextual links from one document to another because they all relate to the same story. But the links are not well defined and the screenwriter has to often refer back to some documents in the writing process in order to maintain the consistency of the story in the final script. Other documents may be used by a writer in the further stages of the script creation project. For example, the "pitch" is a key element for marketing the project.

Digital content creation is a lengthy creative task that requires much iteration. Currently, a writer typically edits multiple documents but generally is not able to establish a full set of links between them; therefore making it difficult to ensure consistency between documents. A typical example is when the name of the main character is changed while the script is nearly completed, and therefore for example resulting in inconsistent summary and synopsis. This is particularly embarrassing when these elements are used to promote the movie in festivals, program guides, and movie review sites.

None of the existing writing tools proposes to analyze a set of linked documents in order to check for inconsistencies. None of them ensures the consistency of the different elements of the story.

**SUMMARY**

This summary is provided to introduce a selection of concepts in a simplified form as a prelude to the more detailed description that is presented later. The summary is not intended to identify key or essential features of the invention, nor is it intended to delineate the scope of the claimed subject matter.

In one aspect of the invention, a method for checking the consistency between documents involved in a writing process used for a writing project includes receiving, by a computer, a graph model for the writing process, the graph model including a plurality of nodes and links between the plurality of nodes. A direction and type of the links is established in the graph model and at least two documents are received. The received digital documents are associated with nodes on the graph model. The consistency analyzer analyzes the received digital documents associated with nodes in the graph model. The analysis includes a determination of a consistency error between the received digital documents. A notification that consistency errors exist between the received digital documents is provided.

In an embodiment of the method, receiving a graph model includes one or more of receiving a pre-existing model or entering a graph model using a user interface to the computer. In an embodiment of the method, determining the direction and type of the links includes entering or editing the direction and type of the links of the graph model. In an embodiment of the method, receiving at least two digital documents includes at least one of receiving at least one document from an external source and generation of at least one document using the consistency analyzer. In an embodiment of the method, associating the received digital documents with nodes on the graph model includes automatically comparing headers in the document against node identifiers and associating a received digital document with a node according to the comparing. In an embodiment of the method, associating the received digital documents with nodes on the graph model includes an assignment by a user via selection of a node in the graph and identifying a received digital document corresponding to the selected node. In an embodiment of the method, analyzing the received documents associated in the graph model includes performing a consistency value computation based on the consistency type between two nodes. In an embodiment of the method, providing a notification that a consistency error exists between the received documents includes providing a list of documents, the consistency error, and a location of the consistency error. In an embodiment of the method, notification that a consistency error exists includes one of notification by displaying the consistency error, notification by speech synthesis, notification by printing, notification by storing in a log file, or by sending notice of the consistency error to another device.

In another embodiment, an apparatus for checking the consistency between documents describing a writing project is presented. The apparatus includes a consistency analyzer resident on a computer, the consistency analyzer includes a first interface to receive digital documents, a second interface used to receive a graph model that includes a plurality of nodes representing digital documents of the writing project, wherein the graph model includes links specifying consistency direction and consistency type between the nodes, and a processor that associates the received digital documents with nodes on the graph model, the processor performing an analysis of the received digital documents associated in the graph model, results of the analysis including a determination of a consistency error between the received digital documents.

In an embodiment of the apparatus, the first interface is one of an external data source interface and a network interface. The second interface is one of a network interface to receive a graph model from an external network or a user interface used to construct the graph model. In an embodiment of the apparatus, a display interface provides a notification of the consistency error. The consistency error is filtered using a threshold value before providing the notification. The notification of the consistency error includes providing a display of a list of documents, the consistency error, and a location of the consistency error. In an embodiment of the apparatus, the processor associates the received digital documents with nodes on the graph model by automatically comparing headers in the received digital document against node identifiers and associating a received digital document with a node. The processor associates the received digital documents with nodes on the graph model by a user selecting a node in the graph model and identifying a received digital document corresponding to the node.

In one embodiment, a non-transitory computer readable program product includes program code instructions for performing the checking method described above when the non-transitory software program is executed by a computer. In another embodiment, a computer readable storage medium carrying a software program includes program code instructions for performing the checking method described above according when the non-transitory software program is executed by a computer.

Additional features and advantages of the invention will be made apparent from the following detailed description of illustrative embodiments which proceeds with reference to the accompanying figures. It should be understood that the drawings are for purposes of illustrating the concepts of the disclosure and are not necessarily the only possible configuration for illustrating the disclosure.

BRIEF DESCRIPTION OF THE DRAWINGS

The foregoing summary of the invention, as well as the following detailed description of illustrative embodiments, is better understood when read in conjunction with the accompanying drawings, which are included by way of example, and not by way of limitation with regard to the claimed invention. In the drawings, like numbers represent similar elements.

Figure 1 depicts an example of a node graph model;

Figure 2 depicts an example in-line graph model depicting a hierarchy of elements;

Figure 3 depicts an example multi-link graph model of elements;

Figure 4a depicts an example unidirectional graph model of elements;

Figure 4b depicts an example bidirectional element in a graph model;

Figure 5a depicts an example mapping of parts of one element to parts of another element;

Figure 5b depicts an example of a consistency error detected between two elements;

Figure 5c depicts an example of the resolution of the consistency error of Figure 5b;

Figure 5d depicts an example of an unreported consistency error due to consistency direction;

Figure 6 depicts an example of circular consistency links;

Figure 7 depicts an example of organized text elements such as index cards;

Figure 8 depicts an example of consistency links between sub-elements of different elements;

Figure 9 depicts an example of a consistency check on an element available in multiple iterations;

Figure 10 depicts an example of tiered refinements of elements in a graph model;

Figure 11 depicts an example flow diagram of a method according to principles of the invention; and

Figure 12 illustrates an example apparatus that can perform the method of Figure 11 according to aspects of the invention.

## DETAILED DISCUSSION OF THE EMBODIMENTS

In the following description of various illustrative embodiments, reference is made to the accompanying drawings, which form a part thereof, and in which is shown, by way of illustration, how various embodiments in the invention may be practiced. It is to be understood that other embodiments may be utilized and structural and functional modification may be made without departing from the scope of the present invention.

During the creation of a digital content, for instance a text-based content, multiple intermediate contents, notably text-based contents are created and edited separately, sometimes by different writers. As described earlier, these elements have some kind of relationship together and cannot be considered as independent because they are about the same story but are expressed in differing detail, length, scope, and focus. Currently there is no way to ensure the consistency between all these elements.

The current invention provides a creation system that checks for consistency between all graph model documents automatically and notifies the writers of inconsistent elements. By using this system, a writer is assisted by a system that is able to detect inconsistency automatically. This is particularly interesting in a collaborative creation environment where multiple authors join their efforts and where every author cannot read all the documents written by their peers. One typical example is the creation of TV series. There, multiple writers use differing elements to create their own portions of the script, yet the end product must be free from inconsistency to tell a coherent story.

For example, a main character named Luke may appears in the logline element. The present invention will verify the presence of Luke in all other document elements and if Luke dies in the second scene of the script or appears only in the middle of the story, then there may be an inconsistency that should be notified to the writers.

Thus, in one aspect of the invention, a text-based content writing system is provided that dynamically analyzes different elements generated through the writing creation process, including intermediary elements. This system helps writers to ensure the consistency between these elements by providing indicators to the writers to show the inconsistency.

Furthermore, in typical screenwriting process, many of these elements are written iteratively so that writing a new version may voluntarily introduce an inconsistency. When the inconsistency is desired, the writer is notified until he resolves the inconsistency across all elements. This notification and identification of affected elements feature will allow writers to work more efficiency and to be sure of the consistency of his elements. It allows also a more collaborative writing process since the system checks the consistency continuously.

In every creation process of a complex text-based content, such as a movie script, it is necessary to progress by steps. Each step is followed by the next one temporarily. Sometimes, several steps can be started simultaneously, but generally a kind of temporal link is assumed between steps. Every step allows creating either a more detailed and precise element compared to the previous element or allows completing the description of the storyline of the movie or TV show according to another point of view.

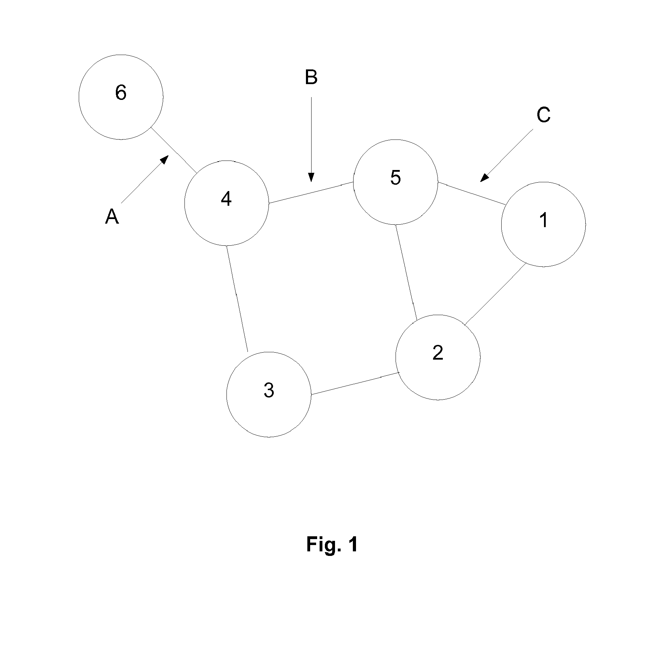

A good way to model these kinds of links between elements is to use some principles of graph theory. The "graph" in this context is made up of nodes (vertices) and lines (edges) that connect them. For example, Figure 1 depicts a graph. The graph has six nodes numbered 1 to 6. The nodes are vertices on the graph. The nodes are connected via lines, such as A, B, and C. The lines are the edges of the graph. The graph may be undirected, meaning that there is no distinction between the two nodes associated with each line, or its lines may be directed from one node to another. In one aspect of the invention, the elements (documents) are represented as the nodes of a graph and the lines represent the links between the elements. Each line represents a consistency type between two elements. The graph model may contain multiple types of lines to represent different types of consistency between the documents or nodes.

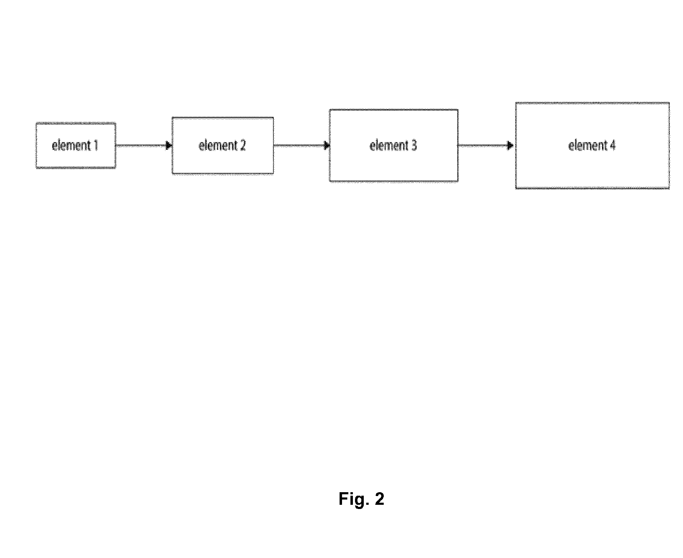

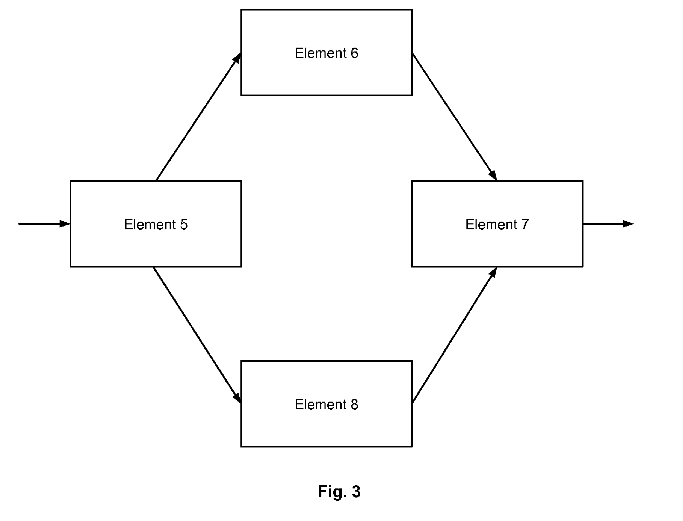

Typically, for a sequential creation of documents, using the graph theory model, the consistency process can be modeled using the representation of Figure 2. In this process, elements are created one after another. One element can only be checked when the previous element is existing. Consistency checking in this case is useful to verify that the element being written is not inconsistent with the previous ones. It is also possible to write two documents simultaneously, that are in relation with the same document. Moreover, one document can be related to two other documents. Figure 3 is an example of one such graph depicting multiple elements having directional links. The direction of the links in indicated symbolically by the arrows between nodes. In Figure 3, element 5 provides a consistency source to elements 6 and 8 and elements 6 and 8 provide a consistency source for element 7.

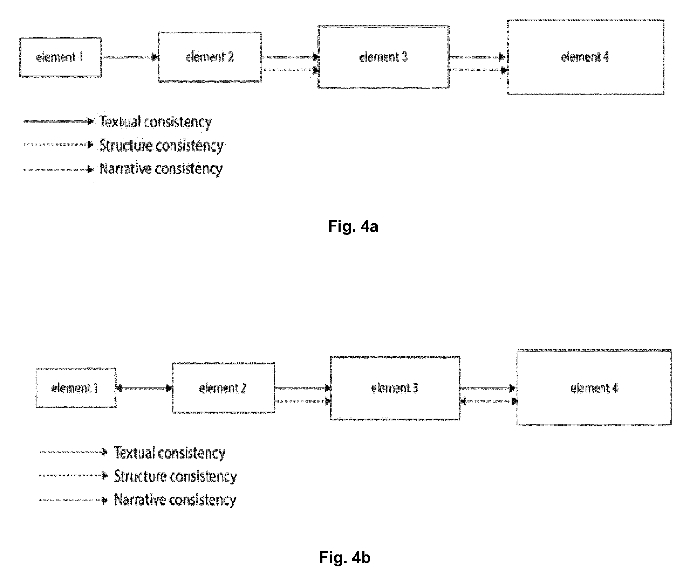

Consistency can take many forms. For example, textual consistency occurs when two texts are using similar words. Structural consistency occurs when two texts use similar structure and organization. Narrative consistency occurs when two texts follow similar narrative structure. As an aspect of the current invention, these different consistencies are expressed as relationships between elements. A graphical representation is used to define the elements and their relationship types. As a consequence of this representation, the system derives the set of consistency checks needed between elements. A unique graphical representation (a type of arrowed line) is associated for each of type of consistency. For example, arrowed lines having solid lines can be associated with textual consistency, arrowed lines having dotted lines can be associated with structural consistency, and arrowed lines having dashed lines can be associated with narrative consistency. However, it is understood that any established consistency type convention may be used. It is also understood that elements can have different types of relationships and therefore can be connected by a plurality of consistency arrows. Figures 4a and 4b, depict the element model of Figure 3 having different consistency types between elements. Figure 4b indicates a bidirectional relationship between element 3 and element 4.

Consistency between elements can be defined using two levels; strong and weak. A strong level of consistency implies that when an element is modified, all elements linked to it with a consistency link must be reviewed to ensure the elements reflect the modification whenever it is possible. Given a strong consistency level between two elements, if an inconsistency is discovered, one or more elements must be updated by the user to resolve the error. Given a weak level of consistency between two elements, if an inconsistency is discovered, a notification will trigger indicators to show to the writers that the inconsistency have been detected between two elements. Writers are then free to make a modification or to leave it in this state. Indeed, in some cases, the inconsistency can be voluntary introduced into one or more of the elements as part of the storyline. One typical example is the movie title that very often has no consistency with the movie script. For example the titles American Graffiti, Basic Instinct, Les Misérables, Tears of Steel, etc. have not relation with their respective scripts. The user can bypass this notification and does not need to resolve the issue.

Furthermore, an element can be totally isolated without consistency with other elements. A consistency link can be unidirectional where direction can be important to identify an order of events. Alternately, a consistency link can be bidirectional allowing both a source and a destination node to remain consistent with one another.

In the case of unidirectional link, the consistency is calculated in the link direction, and potential modification to be applied to ensure consistency is made only in this direction.

Figure 4a depicts different types of unidirectional links between elements 2 and 3 and between elements 3 and 4. In the case of bidirectional link, the consistency is ensured in both directions whichever element is modified. Figure 4b depicts different types of bidirectional links between elements 1 and 2 and between elements 3 and 4.

In operation, when a modification is made to an element, the system checks the direct consistency link that this element has with other ones and displays a notification when an inconsistency is discovered. According to an aspect of the invention, for every element, the consistency links with other elements should be specified. Options for the specification of the consistency links between elements include manual definition and automatic definition.

In a manual definition, the user can specify the direction and type of consistency link once for all for the entire system. In this case, the user has to enter all relationships between all the elements. If a new element or a new consistency definition (direction and type) are needed, then the graph model must be modified made and the consistencies must be analyzed again. When adding an element, the user specifies the type of consistency that links this new element to existing elements so that a consistency analysis can be performed.

In an automatic definition, the system will automatically calculate which type of consistency seems to be appropriate for a particular element. For instance, when an element is created from another one, the system can automatically infer a textual consistency link between these two elements. In one aspect of the invention, an automatic definition of consistency links, (direction and type) is presented to the user through a user interface that allows the user to view, edit, and add consistency link for every element.

After a graph model is generated showing the elements and links between them, a consistency analysis may be performed based on the model and the content of the elements (documents). The system calculates consistency value between two elements using an algorithm. For each type of consistency, a corresponding consistency algorithm will be used. In one embodiment, the consistency value is a floating value between 0 and 1. A value of 0 indicates no consistency and value of 1 indicates a perfect consistency. In the instance where the calculation is not possible between two elements, the result of the consistency can be set to the arbitrary value of -1. Consistency valuation scales other than 0 to 1 may be used. Examples include 0 to 10 or 0 to 100.

A simple example of an algorithm usable for textual consistency (C) is to compute the presence of words in each document to be compared. Given two text documents, $(T_1, T_2)$, all words ($m$) in each of the two sets of text are considered for the analysis. After computing the number of common words in the two sets, this number is divided by the size of the smallest set size in order to give more importance to the words of the smallest text. An example algorithm is as follows in Equation 1:

Where $T_1 = set(m_i)$, $T_2 = set(m_j)$,

$$C(T_1, T_2) = \frac{|T_1 \cap T_2|}{\min(|T_1|, |T_2|)}$$

Although Equation 1 is very simple, the results are very good when at least one text is small. One weakness with Equation 1 is that it directly uses the words present in each text. Typically, a word in singular in one text and in plural in the other text will not be matched by the calculation. To counter this effect, it is possible to use part-of-speech tagging (POST) as shown in Equation 2. This well-known technique associates the normal form of the word to a simplified form and categorizes them as nouns, verbs, adjectives, adverbs, etc. Equation 2 is as follows:

$$T_1 = POST\left(set(m_i)\right), T_2 = POST\left(set(m_j)\right),$$
$$C(T_1, T_2) = \frac{|T_1 \cap T_2|}{\min(|T_1|, |T_2|)}$$

Equation 2 allows matching verbs that were not conjugated in the same tenses, matching names one time in plural and one time in singular, matching adjectives with different genres, etc.. However, Equation 2 does not take into account the categorization of words produced by POST algorithm. All categories of words are not necessarily very relevant for this type of computation. Conventionally, in a text, it is possible to limit, without much loss of relevance, to nouns, verbs and adjectives. Another alternative to equation 2 is Equation 3 as follows:

$$T_1 = \left[POST\left(set(m_i)\right)\right]_{\langle noun|verb|adjective\rangle}, T_2 = \left[POST\left(set(m_j)\right)\right]_{\langle noun|verb|adjective\rangle}$$
$$C(T_1, T_2) = \frac{|T_1 \cap T_2|}{\min(|T_1|, |T_2|)}$$

The use of Equation 1, Equation 2, or Equations 3 allows for good results in instances where two text documents to be consistency checked are relatively long and constructed texts. However, some words (such as the verbs "have" and "be") are too frequent in common language and take too much importance. This can have the unfortunate effect of masking the words more specific to the text. To overcome this issue, it is possible to eliminate the most common words when using any of the three equations. One example is to eliminate up to 25 of the most frequent words before applying the algorithms. Then Equations 1 or 2, or 3 can be used with higher accuracy.

All of the above Equations are correct whatever the type of text and language. In some specific cases, it may be advantageous to determine new formulas that take into account the specificities of the texts, as language or technique.

A consistency can be of several types. Different consistency types may be established as the needs of the document node interdependency is established in a graph model for the writing project. Three examples of consistencies are given below:

- Textual: Textual content of the two elements are analyzed by the system to find the content of one text in the other one. The consistency represents the percentage of content found in the other one.
- Structural: Textual element is composed of multiple blocks of text. This type of consistency is calculated by comparing the equality of an identified block of the first element with another identified block in the second element. It's a relation of equality.
- Narrative: The consistency of narrative structure between elements is compared. Narrative structure defines rules to follow, and key parts should be present in every element. The system will control that elements with this type of consistency follow these rules by comparing the presence of the key parts in the two elements. If a sufficient number of the key parts are present, the system will consider that the consistency is ensured.

All the consistency types can be complementary, so between two elements several consistency types can exist similarly.

Regarding narrative consistency, different types of narrative structures exist. A simple example of narrative structure is the 3 act narrative structure described by Syd Field in "The Screen Writer's Workbook" ISBN 0385339046A The Monomyth is a more complex narrative structure, described by Joseph Campbell in "The Hero with a thousand faces" ISBN 9781577315933 split in 17 stages or sections. In order to introduce the narrative structure in a text, a tagging mechanism may be used to associate a particular narrative structure to a range of text. This can be implemented for example using xml tags encompassing the text range as follows:

```
<narrative type="3acts">
      <act1>
            here the full text of the first act...
      </act1>
      <act2>
            here the full text of the second act...
      </act2>
      <act3/>
   </narrative>
```

An example of algorithm for computing the narrative structure consistency first checks that the same type of narrative structure is used. If it is not the case, then the consistency value is set to the arbitrary value of "-1" to indicate that consistency cannot be checked. When the same type of narrative structure is used it is then verified that all the different sections of the structure are existing in both documents in the right order. For each erroneous section, a penalty of 1 over the number of sections is subtracted from the consistency value. For example, if the first section of a 3-act structure is missing in one of the document, then the maximal consistency value is 1 - 1/3 = 0.66.

After that first phase, the duration of the different sections of the narrative structure are analyzed. There are some heuristics for some type of narrative structures. For example, in the 3-act structure, time is allocated to each act as follows: 1/4, 1/2, 1/4. This proportion must be more or less respected by all documents respecting this type of structure because it should describe more things in Act 2 than in the other two acts because of the time allotment. In the example where all three sections have the same size, the second act is considered too small and therefore a penalty of 1/6 is subtracted from the consistency value since that is the difference between what is expected (1/2) and what is available (1/3). Similarly, the first act and the third act are too long (1/3 instead of 1/4) and therefore 2 times 1/12, so another 1/6, is again subtracted, leaving a total of 0.66 for the overall consistency value.

At the script level, one frequently uses approximation to estimate the duration of the script is around 1 minute per text page. Again if the proportion is not respected, the corresponding penalty will be subtracted from the consistency value according similar principle. Depending on the consistency and depending on the precision that is desired in calculating a consistency check on narrative structure, an adjustment may be made in an element that changes the basic narrative structure.

The system of the current invention determines consistency values between elements by analyzing pairwise relations between the elements of the graph that represents the relationship of the elements. Only elements linked by a consistency direction and type in the graph model are analyzed for consistency. Using a consistency valuation range of 0 to 1, consistency values of 1 represent perfect consistency and consistency values of 0 represent no consistency. Consistency values less than 1 can also indicate an inconsistency. That is, an inconsistency is a consistency error. To prevent all values less than 1 from triggering a consistency error, a consistency error may be reported when the consistency measure is below a threshold. For example, if between two nodes, an analysis of a consistency type has a calculated consistency value of 0.9, a consistency error may not be reported to a user unless the calculated consistency value falls below a 0.8 threshold. Such thresholds may be set by a user for each consistency type and direction. Such thresholds represent filtering of the consistency analysis results and can affect whether a user is notified of a consistency error. The use of thresholds in reporting consistency errors is optional.

When consistency calculations are performed, if the system detects some inconsistency, the system indicates to the user where to find the consistency error (i.e. the inconsistency). In this instance, the system will follow the direction of consistency to place indicators to expose the inconsistency to the user. Multiple implementations can be used as a user interface to display these indicators to the user.

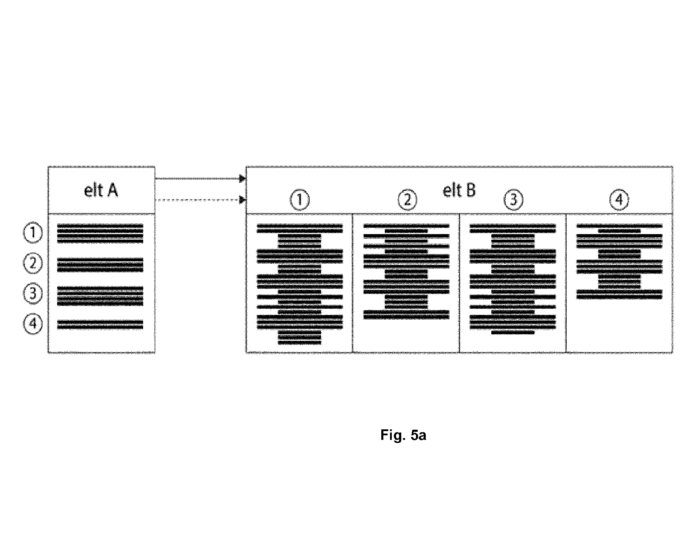

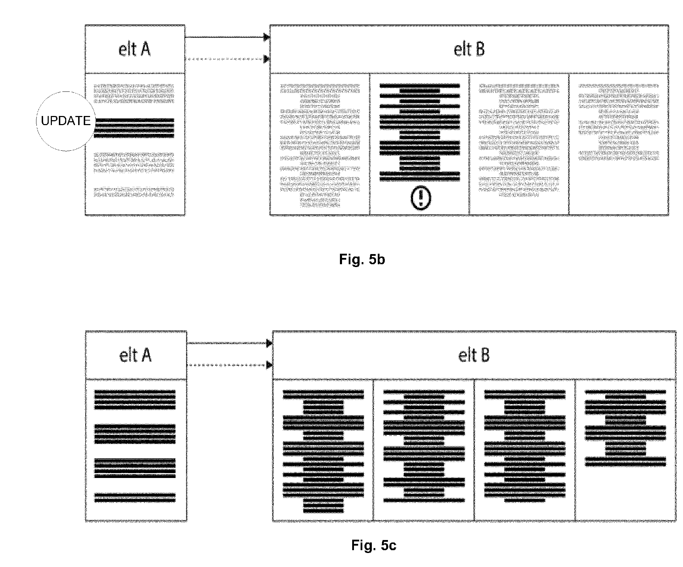

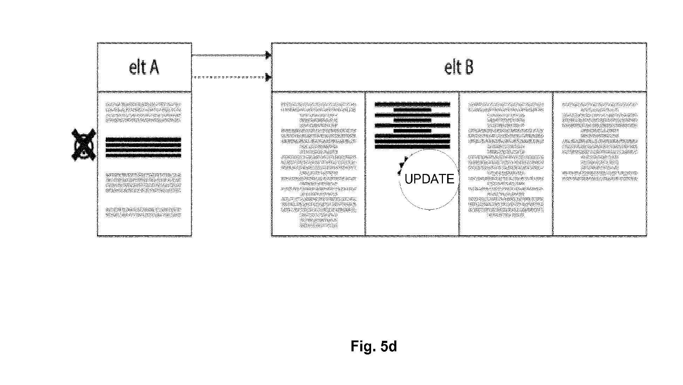

Figures 5a, 5b, 5c, and 5d depict possible relationships between portions of one document, element A, and another document, element B. In the example of Figure 5a, element A (eltA) is the treatment and element B (eltB) is the script. Between them, two consistency links have been settled by the user: a textual consistency and a structure consistency. In the element A treatment, each block has structural and textual consistency with a scene in the element B script illustrated by the same text block numbers 1, 2, 3, 4 in Figure 5a.

If a modification is made in the block 2 of the element A, as in Figure 5b, the system will calculate the consistency with the page 2 of the element B, and if an inconsistency is identified, an indicator will appear on the page 2 of the element B. This indicator will provide information about the modification, and can propose an automatic update of the element B if it is possible. Such an indication of an inconsistency, or a consistency error, is shown in Figure 5b.

If the user validates the update, the page 2 of the element B is updated, and all indicators disappear. This is shown in Figure 5c.

As noted before consistency has a direction and type. The direction of the consistency relation is important. In the example of Figures 5a, 5b, 5c and 5d, consistency is only specified from the element A to the element B and not in the other direction. So if a modification is made in the element B, no consistency will be checked with the element A, and no indicator will appear on the element A page to warn the user. This condition is depicted in Figure 5d.

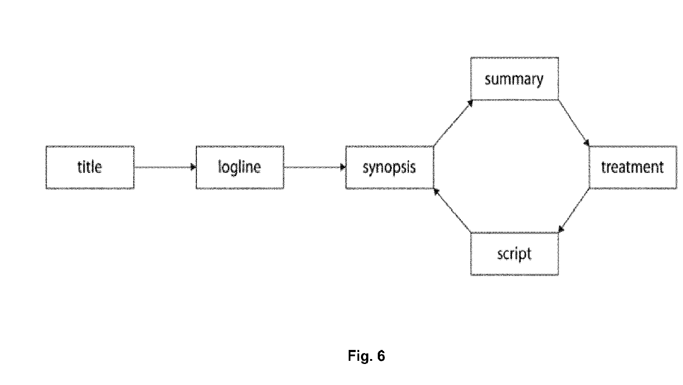

A first example embodiment of a graph depicting a writing process is shown in Figure 6. For this first level of embodiment, simple textual elements are considered that are specialized elements of the story writing creation process. These elements follow each other logically and there needs to be the indicated direction of consistency between the elements. The textual consistency relationships between elements are shown in Figure 6. Note that the textual consistency has a direction indicated by the arrows where changes to the source element (beginning of an arrow) must be consistent with the destination element (end of an arrow). In Figure 6, circular consistency links between elements are depicted. Circular consistencies often occur when iteration is necessary to settle some elements of the process.

In some instances, the system may automatically apply some modifications in order to ensure consistency between any two elements. For example, when considering the character names, if an inconsistency is detected, the string distance can be computed to the existing character names in order to change the inconsistent name to the closest one. Thus, for example, the name Chewbacco would be automatically changed to Chewbacca. A threshold may be used to avoid some errors when names are too close (for example Dupont and Dupond).

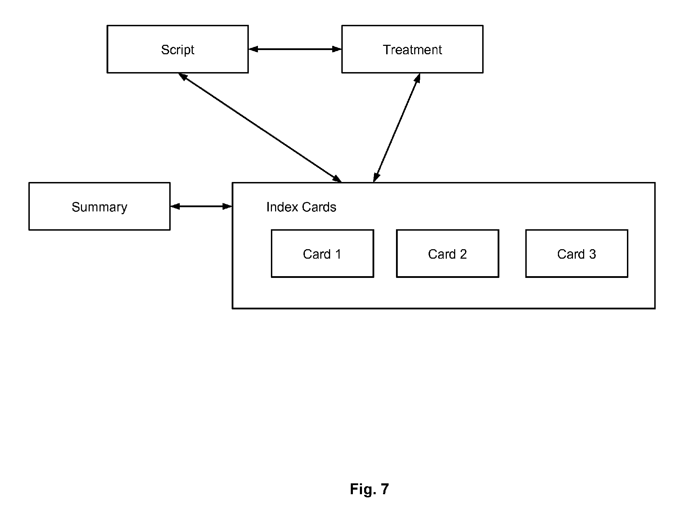

Figure 7 depicts another level of graph modeling that considers that some elements are not only simple text elements, but are composed of organized text elements like index cards for example. Index cards are a step of the story writing creation process that comes traditionally between the summary and the treatment. It is itself composed of several elements that follow logically to describe the story. To compute the consistency between complex documents (e. g. the index cards) and the other documents, it is possible to characterize the complex document instead of addressing each element individually. For example, representative words of each element can be considered and associate to them their occurrence frequency.

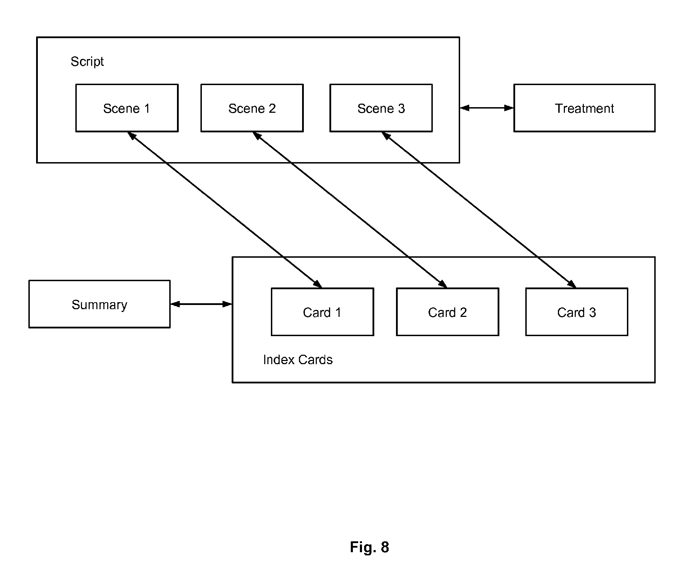

In a further example level of graph modelling complexity using the index card example, Figure 8 shows each sub-element represents a scene that has a strong consistency link with the scene in the index card element. Figure 8 illustrates the possibility of having consistency links between sub-elements of different elements.

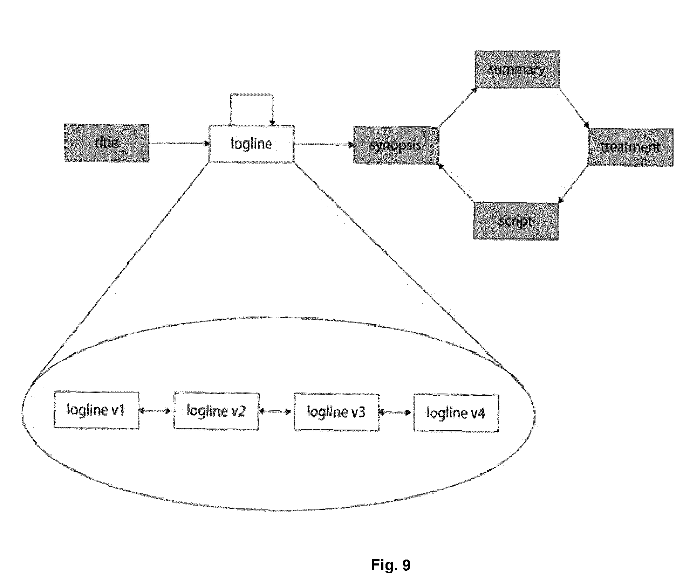

In a third example of graph modelling, the focus is one a single element; specifically a versioned element. Figure 9 depicts a graph model where the logline considers consistency checks internal to the element because the logline element has multiple versions. For example, several versions may be available for an element to keep all the modification made in its history. Each version is itself an element that is linked to its previous and its next element version with a consistency link. Thus, Figure 9 illustrates the condition where a consistency check on an element can be performed with itself.

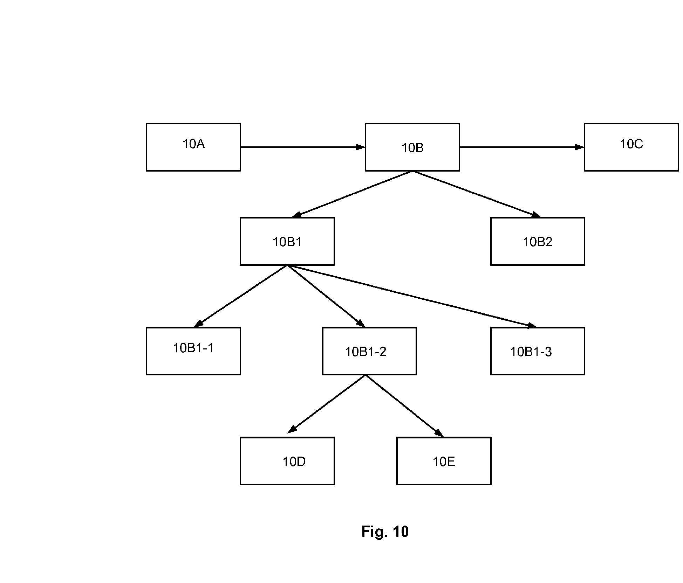

In some instances, the creation is done by successive steps but not in terms of version, but in terms of refinement. Figure 10 depicts a graph model for consistency checks using the present invention where elements 10A, 10B, and 10C describe everything in one or two sentences. The graph then refines structuring through two or more elements that are also described in a few words and so on. Thus, elements 10B1 and 10B2 are a refinement of element 10B. Elements 10B1-1, 10B1-2, and 10B1-3 are a refinement of element 10B1. Elements 10D and 10E are a refinement of element 10B1-2.

In one aspect of the invention, the model complexities of Figures 6 through 10 may be combined into a single model to represent the complexity of the script writing process. Thus, the system performs all consistency checks between all received and modeled elements and displays the result to the user as shown in Figures 5a through 5d.

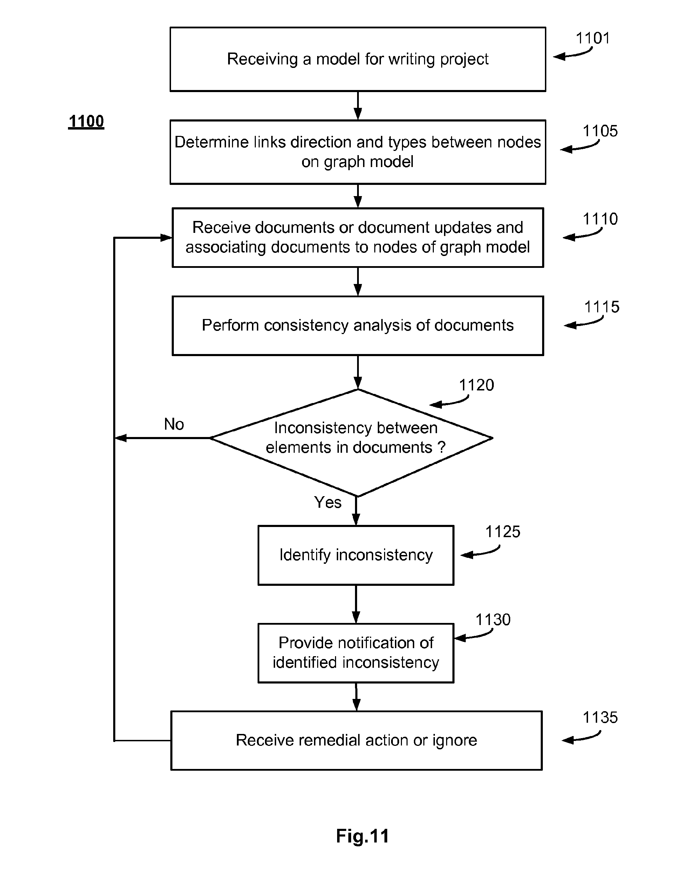

A method according to the principles of the invention is depicted in Figure 11. The method 1100 is performed by a computing machine specifically programmed to perform a consistency analysis of documents. This computing machine is termed a consistency analyzer herein below. Initially, for the method 1100, a graph model is received for the writing project as in step 1101. This graph model may be a model that was used in another writing project or it may be a model made for a specific writing project. In one example, a writing project for a movie script may be undertaken. A simplified graph model can be represented as previously discussed in Figure 6. Here, elements representing different documents are expressed as nodes in the graph model. Additional model details may be added which interconnect additional nodes to as shown in Figures 7, 8, and 9. The basic topography of the graph model establishes the number and general hierarchy of the nodes in the writing model. This model may be entered via a graphical user interface on a display of a computer or other processing machine that hosts the functionality of the consistency analyzer. Alternately, this graphical model may be input or transferred from an external source, such as an external storage device or an external network.

Step 1105 further defines the architecture of the graph model by determining a direction and a type of link that connects different nodes in the graph model. The direction may be unidirectional or bidirectional. The type may include

**EP 3 107 001 A1**

textual, structural, or narrative to establish a consistency linkage between the various nodes. Other types of consistency types may be defined based on the needs of the consistency analyses to be performed. More than one type of link may be used between any two nodes. The selection of direction and type of node establishes the consistency linkages between the nodes. Direction and type of link are used by a processor to search for and detect consistency errors between nodes. Direction and link type may be input by a graphical user interface embodied on the consistency analyzer. The user can either enter or edit direction and link types in the graph model loaded onto the consistency analyzer.

At step 1110, digital documents are received by the consistency analyzer that is to perform the consistency analysis. Received documents are received digital documents and may be either created on the consistency analyzer or received via an external interface to the consistency analyzer. For example, a pre-existing document may be accessed via reading an external data source such as a USB drive, disk drive, or solid state drive which contains a relevant digital document. Alternately, a pre-existing document relevant to the writing project may be acquired via access to an external network such as the Internet, an Intranet, or other network such as a WAN, LAN, or WLAN. In another embodiment, a digital document may be generated using the computer that hosts the consistency analyzer. For example, a word processor may be included on the computer that hosts the consistency analyzer and documents may be generated for the writing project that correspond to nodes on the graph model. As such, digital documents may be generated, edited in any manner, before, after and while being associated with nodes on the graph model.

The received documents are associated with nodes on the graph model. For example, if a first document received is a logline, as in Figure 6, then that document is identified with or associated with the node on the graph that corresponds to the logline node. As digital documents are received, they are associated with nodes based on their individual content. This correlation between received documents and nodes may be performed automatically by examining headers in the document against node identifiers or it may be assigned by a user by selecting a node in the graph and identifying a document corresponding to the node.

At least two documents relevant to the writing project are received by the consistency analyzer. Once two documents are loaded into the consistency analyzer, step 1115 may be performed against the two documents which invokes a comparison between the two documents based on their defined direction and type of linkages between those two respective nodes. A user interface to perform step 1115 may be a simple selection of a function such as a soft button or drop down menu to start the consistency analysis. Alternately, the consistency analysis can be performed automatically as a result of receiving the two documents and assigning them a node in the graph model. As additional documents are received or generated, a consistency analysis may be performed between respective nodes that are correlated with respective documents. Generally, no consistency analysis is undertaken between nodes that have not been assigned a document. The consistency analysis includes a search for or a determination of inconsistencies between the two documents.

At step 1120, the results of the consistency analysis are tested. If an inconsistency between at least two nodes with corresponding documents does not exist, then no inconsistencies are reported and the process moves back to step 1110 where updates to the documents or new documents to populate the graph model can be received. If at step 1120, an inconsistency between at least two documents is found, determined, or detected, then the node or nodes having the inconsistency are identified at step 1125. In a graph model having many associated documents, more than one inconsistency can be identified because there may be different types of inconsistencies, such as textual, structural, and narrative, as well as the possibility of propagation of a single inconsistency into multiple linked documents.

At this point, notification of the one or more identified inconsistencies is reported at step 1130. Generally this done by displaying a list or description of the consistency errors (i.e. the inconsistency finding) along with the associated node and document. The consistency errors can include consistency type errors and other errors such as a consistency direction error, spelling error, missing document error, and the like. The location of the consistency error in the respective documents is also provided via a text or other position indication such as one or more of page, paragraph, and line number. The results of the consistency analysis may be represented as consistency value that represent the consistency between the different elements. In one embodiment, a user of the consistency analyzer is notified via the display of what the inconsistencies are and where they are in the analyzed documents. In another embodiment, the notification of a consistency error may be performed by speech synthesis. Other embodiments of notification include notification by printing (by a printer), notification by storing in a log file, or notification by sending the notification to another device for processing. In one embodiment, reported consistency errors can be filtered such that a consistency value must be less than a threshold to be reported. Different thresholds can exist for different consistency types. Thresholds may be set by the user via a user interface of the consistency analyzer.

The user may then correct the inconsistency at step 1135 by changing the source document or by changing a document downstream in the graph model from the source document. Alternately, the user can instruct the consistency analyzer to ignore the discovered inconsistency. In either event, the remedial action of the user allows the method 1000 to return to step 1110 where additional documents can be either loaded into the graph model nodes or generated on the consistency analyzer.

In one aspect of the invention, the consistency analyzer may be one of many networked computers. The

9

networked computers may be networked either remotely or locally and in any manner. The multiple networked computers can interface to each other via their separate network interfaces. Only one of the networked computers need have the consistency analyzer. However, many or all of the networked computers may have an instance of the consistency analyzer. Each networked computer can be operated by a writer that is generating one or more documents for use in the writing project. Each of these documents can be used as documents in the nodes of the graphic model used by the analyzer. Thus, collaboration is easily accommodated in the writing project and inconsistencies in the documents produced can be discovered by the consistency analyzer and reported to the authors for remedial action. Such remedial action can be to ignore the inconsistency or change the source or downstream documents.

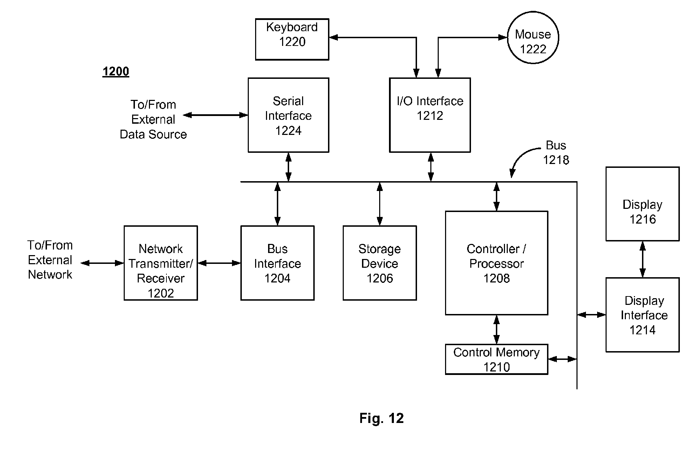

Figure 12 depicts a consistency analyzer 1200 according to aspects of the invention. The consistency analyzer is constructed around one or more controller or processors 1208 having access to memory 1210. The processor 1208 is used to execute software that assists in performing the consistency analyzer functions, such as those described with respect to Figure 11. Software for such functions may be located in control memory 1210 or in another device such as storage device 1206. Bus 1218 is used to interconnect internal and external interfaces to the controller processor 1208.

Documents to be loaded into the consistency analyzer may be transferred into the consistency analyzer memory or storage device 1206 via either a network transmitter/receiver 1202 using bus interface 1204 or via serial interface 1224. Additionally, documents for graph model node assignment may also be created at the consistency analyzer using a keyboard 1220, a mouse 1222 using an I/O interface 1212. A display 1216 may be external or built into the consistency analyzer and is driven via a display interface 1214. Graphical user interfaces can be displayed on the display 1216. The human interfaces 1216, 1220, and 1222 and the like can also be used to generate the graph model on the consistency analyzer. If a graph model already exists, it can be input into the consistency analyzer via the network transmitter receiver 1202 or via the serial interface 1224. Serial interface 1224 can notionally interconnect to any type of external data source such as a USB, a CD, DVD, solid state drive, disk drive, or an external user interface of any type. Notifications of inconsistencies may be made via display 1216, notification by speech synthesis via software in processor 1208 and a speaker interface (not shown in Figure 12), notification by printing (not shown), notification by storing in a log file in storage 1206, or by sending notice of the consistency error to another device via serial interface 1224 or network interface 1202.

The implementations described herein may be implemented in, for example, a method or process, an apparatus, or a combination of hardware and software. Even if only discussed in the context of a single form of implementation (for example, discussed only as a method), the implementation of features discussed may also be implemented in other forms. For example, implementation can be accomplished via a hardware apparatus, or via a hardware and software apparatus. An apparatus may be implemented in, for example, appropriate hardware, software, and firmware. The methods may be implemented in, for example, an apparatus such as, for example, a processor, which refers to any processing device, including, for example, a computer, a microprocessor, an integrated circuit, or a programmable logic device.

Additionally, the methods may be implemented by instructions being performed by a processor, and such instructions may be stored on a processor or computer-readable media such as, for example, an integrated circuit, a software carrier or other storage device such as, for example, a hard disk, a compact diskette ("CD" or "DVD"), a random access memory ("RAM"), a read-only memory ("ROM") or any other magnetic, optical, or solid state media. The instructions may form an application program tangibly embodied on a computer-readable medium such as any of the media listed above or known to those of skill in the art. The instructions thus stored are useful to execute elements of hardware and software to perform the steps of the method described herein.

**Claims**

1. A method for checking the consistency between digital documents of a writing project, the method performed by a consistency analyzer resident on a computer, the method comprising:

   receiving, by the computer, a graph model including a plurality of nodes and links between the plurality of nodes (1101);
   determining a direction and consistency type of the links (1105);
   receiving at least two digital documents and associating the received digital documents with nodes on the graph model (1110);
   analyzing the received digital documents associated in the graph model, the analysis being performed by the consistency analyzer and including a determination of a consistency error between the received digital documents (1115, 1120, 1125); and
   providing a notification that the consistency error exists between the received digital documents (1130).

2. The method of claim 1, wherein receiving a graph model comprises one or more of receiving a pre-existing model or entering a graph model using a user interface to the computer; and
wherein determining the direction and type of the links comprises entering or editing the direction and type of the links of the graph model.

3. The method of claim 1, wherein receiving at least two digital documents comprises at least one of receiving at least one document from an external source and generation of at least one document using the consistency analyzer.

4. The method of claim 1, wherein associating the received digital documents with nodes on the graph model comprises automatically comparing headers in the document against node identifiers and associating a received digital document with a node according to the comparing.

5. The method of claim 1, wherein associating the received digital documents with nodes on the graph model comprises an assignment by a user via selection of a node in the graph and identifying a received digital document corresponding to the selected node.

6. The method of claim 1, wherein analyzing the received documents associated in the graph model comprises performing a consistency value computation based on the consistency type between two nodes.

7. The method of claim 1, wherein providing a notification that a consistency error exists between the received documents comprises providing a list of documents, the consistency error, and a location of the consistency error.

8. The method of claim 1, wherein providing a notification that a consistency error exists includes one of notification by displaying the consistency error, notification by speech synthesis, notification by printing, notification by storing in a log file, or by sending notice of the consistency error to another device.

9. An apparatus for checking the consistency between documents describing a writing project, the apparatus comprising a consistency analyzer resident on a computer, the consistency analyzer comprising:

   a first interface to receive digital documents (1224, 1202);
   a second interface used to receive a graph model that includes a plurality of nodes representing digital documents of the writing project, wherein the graph model includes links specifying consistency direction and consistency type between the nodes (1202, 1224);
   a processor that associates the received digital documents with nodes on the graph model, the processor performing an analysis of the received digital documents associated in the graph model, results of the analysis including a determination of a consistency error between the received digital documents (1208).

10. The apparatus of claim 9, wherein the first interface is one of an external data source interface or a network interface; and
wherein the second interface is one of a network interface to receive a graph model from an external network or a user interface used to construct the graph model.

11. The apparatus of claim 9, further comprising a display interface to provide a notification of the consistency error; and
wherein the consistency error is filtered using a threshold value before providing the notification.

12. The apparatus of claim 11, wherein the notification of the consistency error comprises providing a display of a list of documents, the consistency error, and a location of the consistency error.

13. The apparatus of claim 9, wherein the processor associates the received digital documents with nodes on the graph model by automatically comparing headers in the received digital document against node identifiers and associating a received digital document with a node.

14. The apparatus of claim 9, wherein the processor associates the received digital documents with nodes on the graph model by a user selecting a node in the graph model and identifying a received digital document corresponding to the node.

15. A computer-readable storage medium carrying a software program **characterized in that** the software program comprises program code instructions for performing the method according to at least one of claims 1 to 8, wherein the program code instructions are executed by a computer.

**Fig. 1**

element 1 → element 2 → element 3 → element 4

**Fig. 2**

**Fig. 3**

**Fig. 4a**

**Fig. 4b**

**Fig. 5a**

**Fig. 5b**

**Fig. 5c**

**Fig. 5d**

**Fig. 6**

```
┌─────────────────┐              ┌─────────────────┐
│     Script      │◄────────────►│    Treatment    │
└─────────────────┘              └─────────────────┘
```

```
┌─────────────────┐      ┌──────────────────────────────────────────┐
│    Summary      │◄────►│  Index Cards                               │
└─────────────────┘      │                                            │
                         │  ┌─────────┐  ┌─────────┐  ┌─────────┐     │
                         │  │ Card 1  │  │ Card 2  │  │ Card 3  │     │
                         │  └─────────┘  └─────────┘  └─────────┘     │
                         └──────────────────────────────────────────┘
```

**Fig. 7**

Script

| Scene 1 | Scene 2 | Scene 3 |

Treatment

Summary

Index Cards

| Card 1 | Card 2 | Card 3 |

**Fig. 8**

**Fig. 9**

| 10A | → | 10B | → | 10C |

| 10B1 | | 10B2 |

| 10B1-1 | | 10B1-2 | | 10B1-3 |

| 10D | | 10E |

**Fig. 10**

1100

```
┌─────────────────────────────────────────┐
│   Receiving a model for writing project  │ ←─ 1101
└─────────────────────────────────────────┘
                    │
                    ▼
┌─────────────────────────────────────────┐
│ Determine links direction and types      │ ←─ 1105
│ between nodes on graph model             │
└─────────────────────────────────────────┘
                    │
                    ▼
┌─────────────────────────────────────────┐
│ Receive documents or document updates    │ ←─ 1110
│ and associating documents to nodes of    │
│ graph model                              │
└─────────────────────────────────────────┘
                    │
                    ▼
┌─────────────────────────────────────────┐
│   Perform consistency analysis of         │ ←─ 1115
│   documents                               │
└─────────────────────────────────────────┘
                    │
                    ▼
              1120
        ◇─────────────────────◇
No ←────  Inconsistency between
        elements in documents ?
        ◇─────────────────────◇
                    │
                   Yes
                    ▼
┌──────────────────────────┐
│  Identify inconsistency   │ ←─ 1125
└──────────────────────────┘
                    │
                    ▼
┌──────────────────────────┐
│   Provide notification of  │ ←─ 1130
│   identified inconsistency │
└──────────────────────────┘
                    │
                    ▼
┌─────────────────────────────────────────┐
│   Receive remedial action or ignore       │ ←─ 1135
└─────────────────────────────────────────┘
```

**Fig.11**

Fig. 12

Europäisches
Patentamt
European
Patent Office
Office européen
des brevets

# EUROPEAN SEARCH REPORT

**Application Number**

EP 15 30 5924

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHRISTIAN NENTWICH ET AL: "xlinkit: a consistency checking and smart link generation service", ACM TRANSACTIONS ON INTERNET TECHNOLOGY., vol. 2, no. 2, 1 May 2002 (2002-05-01), pages 151-185, XP055238362, US ISSN: 1533-5399, DOI: 10.1145/514183.514186 * Section 1-6 * | 1-15 | INV. G06F17/22 |
| X | US 8 429 194 B2 (AYMELOGLU ANDREW [US] ET AL) 23 April 2013 (2013-04-23) * column 1, lines 31-37 * * column 2, lines 31-40 * * column 3, lines 34-40 * * column 4, lines 16-44 * * column 6, line 61 - column 7, line 4 * * claim 1 * | 1,9,15 | |
| A | US 6 848 078 B1 (BIRSAN DORIAN [CA] ET AL) 25 January 2005 (2005-01-25) * abstract * | 1-15 | **TECHNICAL FIELDS SEARCHED (IPC)**<br><br>G06F |
| A | Anonymous: "Final Draft software : the best script and screenwriting software", Writer's Store , 7 May 2015 (2015-05-07), XP002752557, Wayback machine Retrieved from the Internet: URL:https://web.archive.org/web/2015050713 4708/http://www.writersstore.com/final-dra ft-screenwriting-software? [retrieved on 2015-12-22] * the whole document * | 1-15 | |

The present search report has been drawn up for all claims

| Place of search | Date of completion of the search | Examiner |
|---|---|---|
| Berlin | 23 December 2015 | Alt, Susanne |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 30 5924

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2015

| Patent document cited in search report | | Publication date | Patent family member(s) | | Publication date |
|---|---|---|---|---|---|
| US 8429194 | B2 | 23-04-2013 | EP | 2338116 A2 | 29-06-2011 |
| | | | EP | 2340494 A2 | 06-07-2011 |
| | | | EP | 2350812 A2 | 03-08-2011 |
| | | | EP | 2350817 A2 | 03-08-2011 |
| | | | EP | 2350848 A2 | 03-08-2011 |
| | | | US | 2010070464 A1 | 18-03-2010 |
| | | | US | 2010070531 A1 | 18-03-2010 |
| | | | US | 2010070842 A1 | 18-03-2010 |
| | | | US | 2010070844 A1 | 18-03-2010 |
| | | | US | 2010070897 A1 | 18-03-2010 |
| | | | US | 2013198624 A1 | 01-08-2013 |
| | | | WO | 2010030911 A2 | 18-03-2010 |
| | | | WO | 2010030913 A2 | 18-03-2010 |
| | | | WO | 2010030914 A2 | 18-03-2010 |
| | | | WO | 2010030917 A2 | 18-03-2010 |
| | | | WO | 2010030919 A2 | 18-03-2010 |
| US 6848078 | B1 | 25-01-2005 | CA | 2255047 A1 | 30-05-2000 |
| | | | US | 6848078 B1 | 25-01-2005 |

EPO FORM P0459

For more details about this annex : see Official Journal of the European Patent Office, No. 12/82